# EUROPEAN PATENT SPECIFICATION

(11) **EP 0 337 534 B1**
(45) Date of publication and mention of the grant of the patent: **16.03.1994**
(21) Application number: 89200749.3
(22) Date of filing: 23.03.1989
(51) Int. Cl.: A01B 49/04

(54) **A soil cultivating machine**
Bodenbearbeitungsmaschine
Machine de culture de la terre

(30) Priority: 30.03.1988 NL 8800800
(43) Date of publication of application: 18.10.1989
(73) Proprietor: C. van der Lely N.V., NL-3155 PD Maasland (NL)
(72) Inventor: Bom, Cornelis Johannes Gerardus, Rozenburg (NL)
(74) Representative: Mulder, Herman

(56) References cited:
- EP-A- 216 003
- EP-A- 0 081 222
- EP-A- 0 198 563
- FR-A- 2 622 762
- US-A- 3 224 392
- US-A- 3 265 137

## Description

The invention relates to a soil cultivating machine comprising a frame and two soil cultivating units, whereby the frame is mainly disposed between the said two soil cultivating units and is provided with connecting means for connecting the frame with the said two cultivating units to the front side of a tractor and whereby the soil cultivating units are movable upwardly from their working position relative to the frame.

Such a soil cultivating machine is known from EP-A-0 216 003. The system described in said patent application is provided with a third soil cultivating unit, coupled to the rear lifting device of the tractor, whereby a seed drill is provided over the whole working width of the three soil cultivating units.

According to the invention the soil cultivating machine as described in the opening paragraph is characterized in that the soil cultivating units are movable upwardly independent of each other and in that the soil cultivating machine is further provided with a plough, adapted to be coupled to the rear lifting hitch of the tractor, so that a strip of soil adjacent the strip of soil to be ploughed can be worked with one soil cultivating unit moved through the strip of soil already ploughed by means of said plough, while the other soil cultivating unit is lifted, and in that furthermore a seed drill is provided for the said two soil cultivating units, which seed drill is located between the said two soil cultivating units. By means of this provision the plough can perform a first working of the soil, while one of the soil cultivating units can prepare a seedbed thereafter, which seedbed is directed sowed. Although the combination of a soil cultivating unit with seed drill and a plough are known from EP-A-0 198 563, the soil cultivating unit with the whole seed drill therein must be switched from one to the other side when the tractor returns; particularly when the container of the seed drill is completely filled with material, this construction is rather instable.

For a better understanding of the invention and to show how the same may be carried into effect, reference will now be made, by way of example, to the accompanying drawings, in which:
Figure 1 is a schematic plan view of a construction according to the invention;
Figure 2 is, to an enlarged scale, a plan view of a soil cultivating unit arranged near the front side of a tractor;

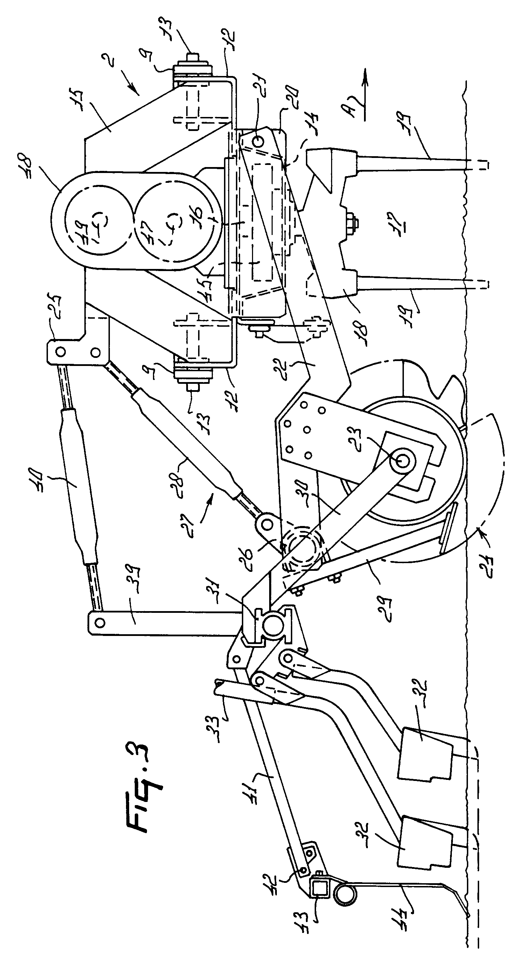

Figure 3 is, to an enlarged scale, a view taken in the direction of the arrow III in Figure 2;
Figure 4 is, to an enlarged scale, a view taken on the line IV-IV in Figure 2, and
Figure 5 is a schematic plan view of a construction according to the invention, in which the soil cultivating unit arranged at the rear of a tractor is replaced by a plough.

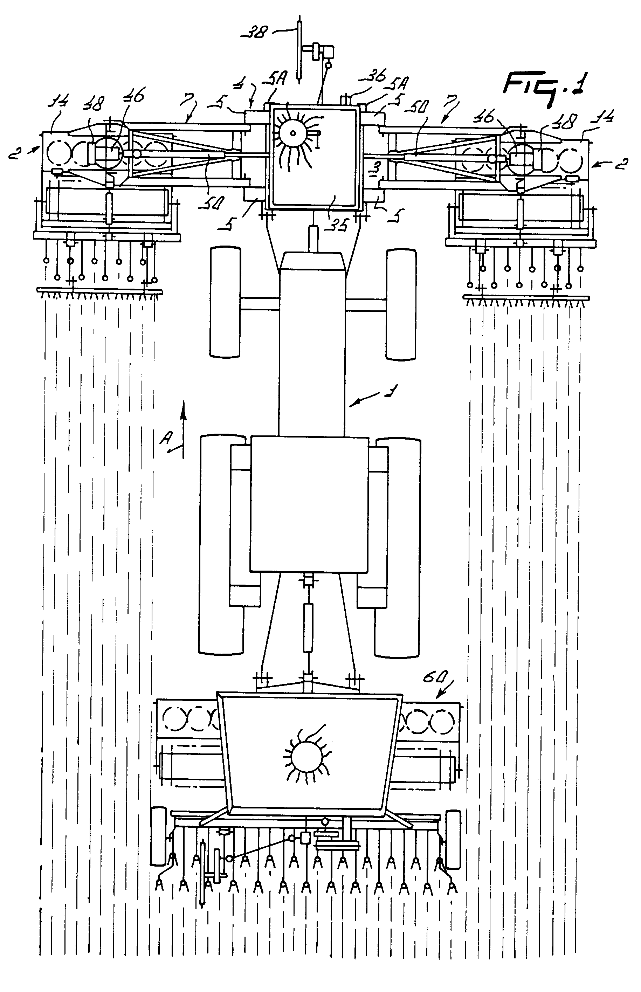

The construction according to the invention as shown in the drawings comprises a tractor 1 and two soil cultivating units 2 arranged on either side at the front of the tractor. The two units 2, which during operation cultivate a strip of soil beside the tractor, are attached to a frame 3 which is connected to the three-point lifting hitch at the front side of the tractor 1 by means of a trestle 3A comprising a three-point connection. The frame 3 has a central portion 4, at which the trestle 3A is arranged. The central portion 4 comprises two transverse beams 5 which extend at least substantially parallel to each other and at least substantially horizontally. The beams 5 are interconnected by means of cross beams 5A which extend in the direction of operative travel A. The ends of the beams 5 are provided with pivotal parts 7 by means of shafts 6 which extend in the direction of operative travel A and are in alignment. Each part 7 includes a beam 8 which extends in the direction of operative travel A and, in the region of the shafts 6, interconnects two parallel beams 9 extending parallel to the beams 5. Near its midway point, each beam 8 is fitted with two diverging supports 10 whose other ends are located near the ends of a cross beam 11 which extends parallel to the beam 8 and is arranged between the beams 9. The ends of the beams 9 of each part 7 constitute the legs of a fork, between which there is arranged pivotably by means of supports 12 and shafts 13 a box-like frame portion 14, the said shafts 13 being in alignment and extending in the direction of operative travel. The frame portion 14 extends at least substantially parallel to the beams 9 of a part 7 and constitutes part of the soil cultivating-seed drill unit 2. The shafts 13 are fastened near the lower end of a bracket 15 which is fitted on a frame portion 14 near the midway point thereof. Inside the frame portion 14 there are supported at equal interspaces of preferably 25 cms the upwardly directed, preferably vertical, shafts 16 of soil working members 17. At the ends of a shaft 16 projecting from the bottom side of the frame portion 14, each of the soil working members 17 includes a carrier 18, said carrier having near its ends downwardly extending soil working elements 19 in the form of tines. The ends of each frame portion 14 are closed by means of plates 20 which extend upwardly and at least substantially parallel to the direction of operative travel A in a vertical plane. Near their leading sides, the plates 20 are provided with a pin 21, the arrangement being such that the pins 21 are in alignment. About each of the pins 21 there is arranged an arm 22 which extends rearwardly along a plate 20. Between the ends of the arms 22 there is supported freely rotatably about shafts 23 a roller 24. Near the midway point of the frame portion 14 there is arranged between a support 25 on the bracket 15 and a cross beam 26 interconnecting the arms 22 an adjusting device 27, which device in this embodiment is constituted by a length-adjustable rod 28. With the aid of the rod 28 the arms 22 can be moved in the upward and downward direction by pivoting about the shafts 21 and be locked in a plurality of positions, the arrangement being such that this allows of a change in the position of the roller 24 relative to the soil working members and hence of an adjustment of the working depth of the soil working members. In this embodiment, the rollers 24 are packer rollers provided at their rear sides with scrapers 29 which are connected to the cross beam 26 and extend to between the crowns of cams. By means of arms 30 which are arranged pivotably about the shafts 23 of the roller 24 there is fitted behind the cross beam 26 a carrier 31, whereon seed coulters 32 are supported pivotably. Via tubes 33 the seed coulters 32 are connected to a distributor mechanism 34 of a common seed drill that with its hopper 35 is positioned on the central frame portion 4 of the frame 3. The frame portion 4 also carries a fan 36 which can be driven via a drive to be described hereinafter from the power take-off shaft at the front side of the tractor, as well as a feeding mechanism 37, with the aid of which seed material can be fed by the fan 36 from the hopper 35 to the distributor 34 which is positioned on the upper side of the hopper 35 and to which the tubes 33 are connected. The feeding mechanism 37 is driven by a step wheel 38 which is, during operation, moved over the soil during operation and is located at the front side. On the upper side of each carrier 31 there is arranged near its midway point a support 39 which is connected to the support 25 on the bracket 15 via a length-adjustable rod 40, the arrangement being such that, when the roller 24 is adjusted, the proper position of the seed coulters 32 can be set again. At some distance from its ends, each carrier 31 is provided with a rearwardly extending pivotal arm 41. Between the ends of the arms 41 there is arranged pivotably by means of transverse pins 42 a carrier 43 carrying downwardly directed resilient tines 44. The tines 44 cover the furrows made by the seed coulters 32. Inside each frame portion 14 of a unit, the shafts 16 of the soil working members 17 are fitted with a pinion 45, the arrangement being such that the pinions 45 on the shafts 16 of adjacent soil working members 17 are in driving connection with each other. Near the centre of the row of soil working members 17, the shaft 16 of a soil working member is extended upwardly and reaches to into a gear box 46. Inside the gear box 46, the extended portion is in driving connection via a bevel gear transmission with a shaft 47 which extends transversely to the direction of operative travel A and is supported in the gear box, the said shaft being in driving connection via a speed variator 48 located at the outside of the gear box 46 with a superjacent shaft 49 projecting from the gear box at the inner side thereof. The projecting end of a shaft 49 is connected via a telescopic shaft 50 to a transverse shaft 50A in a gear box 51 fitted on the central frame portion 4 by means of a support 52. The shaft 50A is connected via a bevel gear transmission to a shaft drive 53 which extends in the direction of operative travel A, and projects from the gear box 51 at the rearside. The shaft 50A projects from the outer side of the gear box 51 and carries a pulley 54, a belt 55 being provided to drive the fan 36. The rear end of the shaft 53 is connected via an intermediate shaft 56 to the power-take off shaft at the front side of the tractor 1. The spacing between the strips of soil to be cultivated by the soil cultivating units 2 on either side of the tractor 1 is such that it corresponds to the customary working width of a soil cultivating unit combined with a seed drill, which combination 60 can be hitched to the rear side of the tractor by means of the three-point lifting hitch (see Figure 1).

The machine in accordance with the invention as described in the foregoing operates as follows.

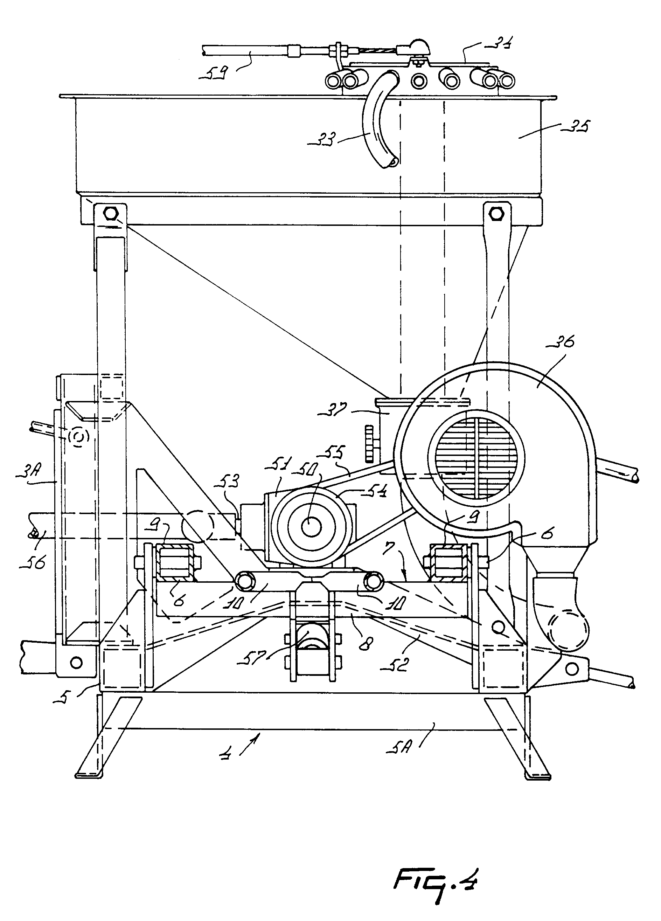

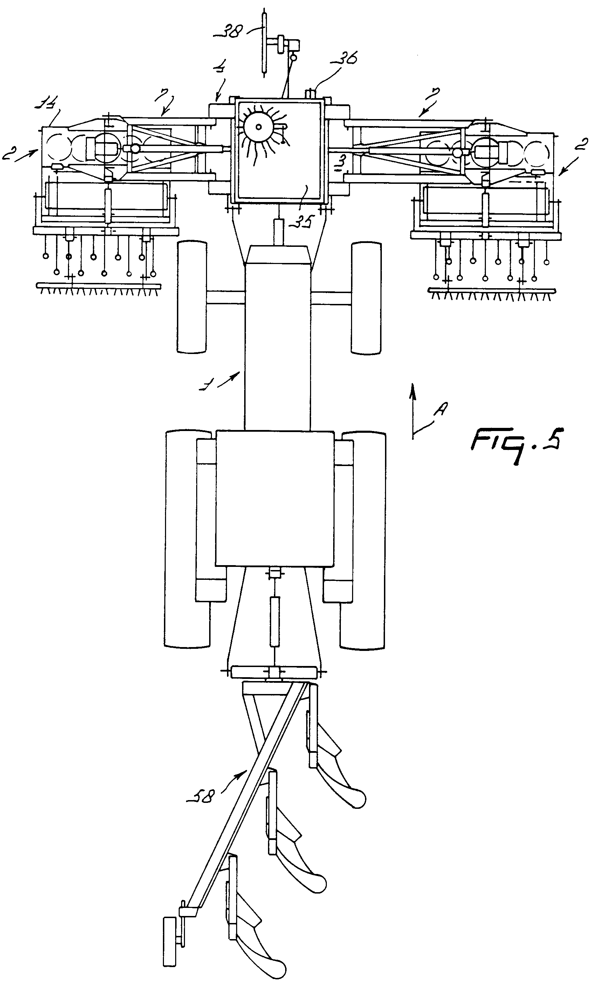

During operation, the entire assembly can be moved in a direction indicated by arrow A, the drive for the soil cultivating machines, which, in this embodiment, are rotary harrows, and the drive for the fan 36 of the seed drill on the central frame portion 4 being derived from the front side drive of the tractor 1. During travel, the soil is worked to a predetermined depth by means of the soil cultivating machines of the units 2 and seed material can be introduced directly into this worked soil via the seed shares 32. The strip of soil between the units 2 can be worked and sown by means of the soil cultivating-seed drill combination 60 hitched to the rear side of and driven from the tractor without the tractor traveling over the worked soil. Using the combination described in the foregoing, it is possible to work and sow the soil over a large width, which in this embodiment is approximately 6 metres, without the negative effect of tractor tracks. Due to the presence of the units 2 at the front side, it is possible to obtain a very uniform weight distribution which significantly increases the stability, in particular during transport. In order to be adjusted to the transport position, the soil cultivating-seed drill units 2 can be hinged upwardly about the shafts 6 by means of a hydraulic adjusting cylinder 57 (Fig. 4) which is arranged between the central frame portion 4 and a frame part 7 and is connected to the hydraulic circuit of the tractor. The lifting hitches at the front and rear sides of the tractor 1 ensure that the respective units are adjusted to the ultimate transport position. It is also possible to attach a plough 58 to the rear side of the tractor, as is shown in Figure 5. Then, a strip of soil aside the tractor, which has already been ploughed, can be worked with the soil cultivating unit 2 positioned on the ploughed field, while the other unit is lifted to some extent by means of the hydraulic adjusting cylinder 57. This also efficiently provides a counter-weight, as a result of which the steerability of the tractor is highly improved.

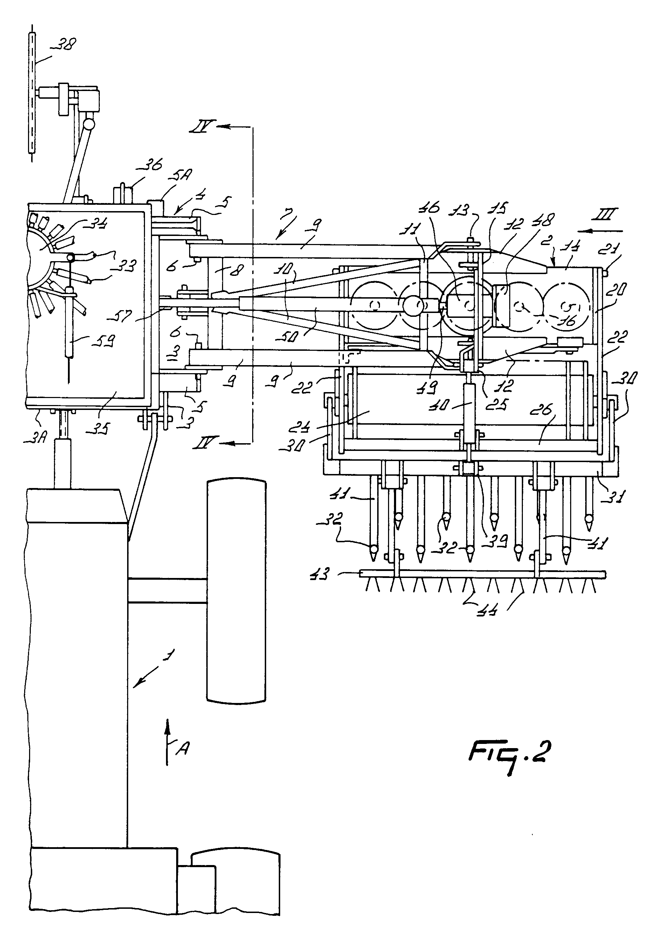

In an arrangement as shown in Figures 2 and 4, by means of a sliding part of the distributor mechanism 34, the side intended for feeding the seed to the lifted unit 2 can be closed by a Bowden cable 59 to be operated from the tractor 1, so that the seed will be transported to the seed coulters mounted to the cultivating unit that will be in operation.

The machine according to the invention could be used as a tillage machine with or without a seed drill and with or without a plough. The seed drill could be in operation with or without the tillage unit being in operation. The left hand unit of the machine could be in operation independently of the unit at the right hand side. The unit of the right hand side could be in operation independently of the unit of the left hand side.

## Claims

1. A soil cultivating machine comprising a frame (3) and two soil cultivating units (2), whereby the frame (3) is mainly disposed between the said two soil cultivating units (2) and is provided with connecting means (3A) for connecting the frame with the said two cultivating units (2) to the front side of a tractor and whereby the soil cultivating units (2) are movable upwardly from their working position relative to the frame (3), characterized in that the soil cultivating units (2) are movable upwardly independently of each other and in that the soil cultivating machine is further provided with a plough, adapted to be coupled to the rear lifting hitch of the tractor, so that a strip of soil adjacent the strip of soil to be ploughed can be worked with one soil cultivating unit (2) moved through the strip of soil already ploughed by means of said plough, while the other soil cultivating unit (2) is lifted, and in that furthermore a seed drill (33 to 37) is provided for the said two soil cultivating units (2), which seed drill is located between the said soil cultivating units (2).

2. A soil cultivating machine as claimed in claim 1, characterized in that the said soil cultivating units (2) comprise a power driven rotary harrow.

3. A soil cultivating machine as claimed in claim 1 or 2, characterized in that the said seed drill (33 to 37) is arranged on the frame (3) that also supports the said soil cultivating units (2).

4. A soil cultivating machine as claimed in claim 3, characterized in that the said frame (3) has a central portion (4) supporting the seed drill (33 to 37), whilst pivotal side portions (7) are provided to support said soil cultivating units (2).

5. A soil cultivating machine as claimed in any one of the preceding claims, characterized in that seed coulters (32) are located behind a soil cultivating unit (2) and are connected to a distributor mechanism (34) of the seed drill (33 to 37) via tubes (33).

6. A soil cultivating machine as claimed in claim 5, characterized in that the said seed coulters (32) are supported by a carrier (31) which is adjustable about the shafts (23) of a roller (24) which supports the soil cultivating units (2).

7. A soil cultivating machine as claimed in any one of the preceding claims, characterized in that the drive for the seed drill (33 to 37) and that for a soil cultivating unit (2) is derived from a central gear wheel transmission which is drivable from the power take-off shaft of the tractor (1).

8. A soil cultivating machine as claimed in any one of the preceding claims, characterized in that the seed drill (33 to 37) for the soil cultivating units (2) is a pneumatic one, which at option can transport the seed to the left hand side or to the right hand side of the machine.

9. A soil cultivating machine as claimed in any one of the preceding claims, characterized in that the feeding mechanism (37) of the seed drill (33 to 37) is driven by a step wheel (38) located in front of the machine.

## Patentansprüche

1. Bodenbearbeitungsmaschine mit einem Gestell (3) und zwei Bodenbearbeitungseinheiten (2), wobei das Gestell (3) überwiegend zwischen den beiden Bodenbearbeitungseinheiten (2) angeordnet und mit Anschlüssen (3A) zum Anschluß des Gestells mit den beiden Bodenbearbeitungseinheiten (2) an die Frontseite eines Schleppers versehen ist, und wobei die Bodenbearbeitungseinheiten (2) aus ihrer Arbeitslage relativ zu dem Gestell (3) nach oben bewegbar sind,
dadurch gekennzeichnet, daß die Bodenbearbeitungseinheiten (2) unabhängig voneinander nach oben bewegbar sind, daß die Bodenbearbeitungsmaschine ferner einen Pflug aufweist, der derart ausgebildet ist, daß er an die heckseitige Hebevorrichtung des Schleppers anzuschließen ist, so daß ein an den zu pflügenden Bodenstreifen angrenzender Bodenstreifen mittels der einen Bodenbearbeitungseinheit (2) zu bearbeiten ist, die durch den von dem Pflug bereits gepflügten Bodenstreifen bewegt wird, während die andere Bodenbearbeitungseinheit (2) angehoben ist, und daß für die beiden Bodenbearbeitungseinheiten (2) weiterhin eine zwischen den Bodenbearbeitungseinheiten (2) angeordnete Drillsämaschine (33 bis 37) vorgesehen ist.

2. Bodenbearbeitungsmaschine nach Anspruch 1,
dadurch gekennzeichnet, daß die Bodenbearbeitungseinheiten (2) eine angetriebene Kreiselegge aufweisen.

3. Bodenbearbeitungsmaschine nach Anspruch 1 oder 2,
dadurch gekennzeichnet, daß die Drillsämaschine (33 bis 37) an dem Gestell (3) angeordnet ist, an dem auch die Bodenbearbeitungseinheiten (2) abgestützt sind.

4. Bodenbearbeitungsmaschine nach Anspruch 3,
dadurch gekennzeichnet, daß das Gestell (3) einen zentralen Teil (4) hat, der die Drillsämaschine (33 bis 37) trägt, während schwenkbare Seitenteile (7) vorgesehen sind, welche die Bodenbearbeitungseinheiten (2) tragen.

5. Bodenbearbeitungsmaschine nach einem der vorhergehenden Ansprüche,
dadurch gekennzeichnet, daß Säschare (32) hinter einer Bodenbearbeitungseinheit (2) angeordnet und über Leitungen (33) mit einem Verteiler (34) der Drillsämaschine (33 bis 37) verbunden sind.

6. Bodenbearbeitungsmaschine nach Anspruch 5,
dadurch gekennzeichnet, daß die Säschare (32) an einem Träger (31) abgestützt sind, der um die Achszapfen der Wellen (23) einer Walze (24) verstellbar ist, die die Bodenbearbeitungseinheiten (2) abstützt.

7. Bodenbearbeitungsmaschine nach einem der vorhergehenden Ansprüche,
dadurch gekennzeichnet, daß der Antrieb der Drillsämaschine (33 bis 37) und einer Bodenbearbeitungseinheit (2) von einem zentralen Zahnradgetriebe abgeleitet ist, das von der Zapfwelle des Schleppers (1) anzutreiben ist.

8. Bodenbearbeitungsmaschine nach einem der vorhergehenden Ansprüche,
dadurch gekennzeichnet, daß die für die Bodenbearbeitungseinheiten (2) vorgesehene Drillsämaschine (33 bis 37) eine pneumatische Drillsämaschine ist, mittels der das Saatgut wahlweise auf die linke oder rechte Seite der Maschine zu befördern ist.

9. Bodenbearbeitungsmaschine nach einem der vorhergehenden Ansprüche,
dadurch gekennzeichnet, daß die Fördervorrichtung (37) der Drillsämaschine (33 bis 37) durch ein an der Vorderseite der Maschine angeordnetes Schaltrad (38) angetrieben ist.

## Revendications

1. Machine pour cultiver le sol comprenant un châssis (3) et deux unités (2) pour cultiver le sol, le châssis (3) étant principalement disposé entre lesdites deux unités (2) pour cultiver le sol et étant muni de moyens de liaison (3A) pour relier le châssis auxdites deux unités (2) pour cultiver le sol sur le côté antérieur d'un tracteur et les unités (2) pour cultiver le sol étant mobiles vers le haut à partir de leur position de travail par rapport au châssis (3),
**caractérisée** en ce que les unités (2) pour cultiver le sol sont mobiles indépendamment l'une de l'autre et en ce que la machine pour cultiver le sol est en outre munie d'une charrue apte à être attelée au dispositif d'attelage/levage postérieur du tracteur, de telle sorte qu'une bande de terrain adjacente à la bande de terrain à labourer puisse être travaillée avec une unité (2) pour cultiver le sol, entraînée sur la bande de terrain déjà labourée au moyen de ladite charrue, tandis que l'autre unité (2) pour cultiver le sol est relevée, et en ce qu'en outre un semoir (33 à 37) est prévu pour lesdites deux unités (2) pour cultiver le sol, ce semoir étant situé entre lesdites unités (2) pour cultiver le sol.

2. Machine pour cultiver le sol selon la revendication 1, caractérisée en ce que lesdites unités (2) pour cultiver le sol comprennent une herse rotative motorisée.

3. Machine pour cultiver le sol selon la revendication 1 ou 2, caractérisée en ce que ledit semoir (33 à 37) est disposé sur le châssis (3) qui supporte aussi lesdites unités (2) pour cultiver le sol.

4. Machine pour cultiver le sol selon la revendication 3, caractérisée en ce que ledit châssis (3) a une partie centrale (4) supportant le semoir (33 à 37), tandis que des parties latérales pivotantes (7) sont prévues pour supporter lesdites unités (2) pour cultiver le sol.

5. Machine pour cultiver le sol selon l'une quelconque des revendications précédentes, caractérisée en ce que des coutres (32) à semence sont situés derrière une unité (2) pour cultiver le sol et sont reliés à un mécanisme distributeur (34) du semoir (33 à 37) par l'intermédiaire de tubes (33).

6. Machine pour cultiver le sol selon la revendication 5, caractérisée en ce que lesdits coutres à semence (32) sont supportés par un support (31) qui est réglable autour des arbres (23) d'un rouleau (24) qui supporte les unités (2) pour cultiver le sol.

7. Machine pour cultiver le sol selon l'une quelconque des revendications précédentes, caractérisée en ce que l'entraînement du semoir (33 à 37) et celui d'une unité (2) pour cultiver le sol est dérivé à partir d'une transmission centrale à engrenages qui peut être entraînée à partir de l'arbre de prise de force du tracteur (1).

8. Machine pour cultiver le sol selon l'une quelconque des revendications précédentes, caractérisée en ce que le semoir (33 à 37) pour les unités (2) pour cultiver le sol est un semoir pneumatique qui peut, au choix, transporter la semence vers le côté gauche ou vers le côté droit de la machine.

9. Machine pour cultiver le sol selon l'une quelconque des revendications précédentes, caractérisée en ce que le mécanisme d'alimentation (37) de semoir (33 à 37) est entraîné par une roue odométrique (38) située en avant de la machine.
